# EUROPEAN PATENT APPLICATION

(11) **EP 2 458 254 A1**
(43) Date of publication of application: **30.05.2012**
(21) Application number: 11190706.9
(22) Date of filing: 25.11.2011
(51) Int. Cl.: F16L 41/06, F16L 47/34, A01G 25/02

(54) **Device for the connection of branch pipes to a main pipe in irrigation systems**

(30) Priority: 26.11.2010 IT MI20102206
(71) Applicant: Teco S.r.l., 00191 Roma (IT)
(72) Inventor: Iacopetta, Cosimo, 76011 Bisceglie (BT) (IT)
(74) Representative: Petruzziello, Aldo

(57) **Abstract**

A description is given of a device (10) for the connection of branch pipes (2) to a main pipe (1) in irrigation systems comprising an elastic clamp (11) carrying a hollow pin (13) with a pointed end (15) suitable for perforating and arranging itself inside the pipe (1), and having an outer section (17) for the fitting of a branch pipe (2), the clamp being open on the side opposite to the pin (13), where series of opposite teeth (22), (24) are provided, suitable for allowing the tightening and not the widening of the clamp (11).

## Description

The object of the present invention is a device for the connection of branch pipes to a main pipe in irrigation systems.

As is known, an irrigation system, for gardens, terraces and the like, normally comprises a main pipe for feeding the water taken from the water mains, usually by means of a timer, from which main pipe small pipes branch off, in the required points, which in this description will be referred to as branch pipes, at whose ends, positioned at the plants to be watered, appropriate nozzles are arranged for the exit of the water, sprayed or dripped.

The main pipe is in a relatively soft plastic material and has a diameter for example of 15-20 mm, while the branch pipes have a diameter of a few millimetres (for example 3-5 mm).

For the connection of a branch pipe to the main pipe in the point required a hole is made in the main pipe with an appropriate pointed tool and then a hollow pin is inserted in the hole, holding externally a union whereon the branch pipe is fitted. The hollow pin normally has a threaded section which is screwed in the hole formed in the main pipe and a flange which abuts against the outer wall of the pipe once insertion has been carried out.

A disadvantage of this solution is that the hole in the main tube has to be made with an appropriate tool and the hollow pin subsequently installed separately.

Another disadvantage is that the hollow pin does not stay stably in position and in time tends to loosen in the hole wherein it is inserted, causing leaks of water, or even to withdraw from this hole.

The object of the invention is that of eliminating the aforesaid disadvantages and more particularly of supplying a rapid and safe connection of the branch pipes to the main pipe of an irrigation system.

Another object of the present invention is that of providing such a device which is simple and economical to manufacture.

These objects are achieved by the device according to the invention which has the features of the annexed independent claim 1.

Advantageous embodiments of the invention are disclosed by the dependent claims.

Substantially, the device according to the invention comprises an elastic clamp, conveniently made in plastic material, made up of an open ring, holding at the aperture unidirectional engaging means suitable for keeping the ring closed, while on the opposite side to the aperture a hollow pin is provided, ending with a pointed part inside the annular clamp and holding an external union for the connection of a branch pipe.

The hollow pin is conveniently formed in a single body with the clamp and has, in the area of junction with the clamp, a concave widening, which follows the circular profile of the clamp, so as to adapt to the outer surface of the main pipe whereon the clamp is to be mounted.

The restraining means suitable for keeping the clamp closed are made up of two series of opposite teeth provided at the respective ends of the clamp.

Mounting of the clamp according to the invention takes place in an extremely simple and rapid manner.

The ends are widened at the aperture until the diameter of the main pipe is exceeded and it is pushed against the pipe on the opposite side to the aperture, so as to perforate it with the tip of the hollow pin which is inserted inside the pipe. Subsequently the ends of the clamp are closed, bringing the aforementioned teeth to engage, until the clamp is firmly blocked on the pipe.

The union for the branch pipe remains in this way stably anchored to the main pipe in time, without the possibility of loosenings, movements or detachments from the main pipe, which could otherwise occur, above all in the phase of possible replacement of the branch pipes.

Further features of the invention will be made clearer by the following detailed description, preferred to one of its embodiments purely by way of a non-limiting example illustrated in the accompanying drawings, in which:
Figure 1 is a perspective view of the device according to the invention, shown in open position;
Figure 2 is a front view of the device of Figure 1;
Figure 3 is a view like Figure 2, showing the device in condition of closure on the main pipe which is shown sectioned together with a branch pipe shown partially;
Figure 4 is a section taken along the plane IV-IV of Figure 2;
Figure 5 is a view from below of Figure 2.

Referring to these drawings, the device according to the invention, for the connection of branch pipes 2 to a main pipe 1 in irrigation systems, has been denoted as a whole by reference numeral 10.

It consists of an annular elastic clamp 11, having an aperture 12, opposite to which a hollow pin 13 is provided, conveniently formed in a single body with the clamp 11. It is not excluded however for the pin 13 to be a part separate from the clamp 11 and made integral thereto.

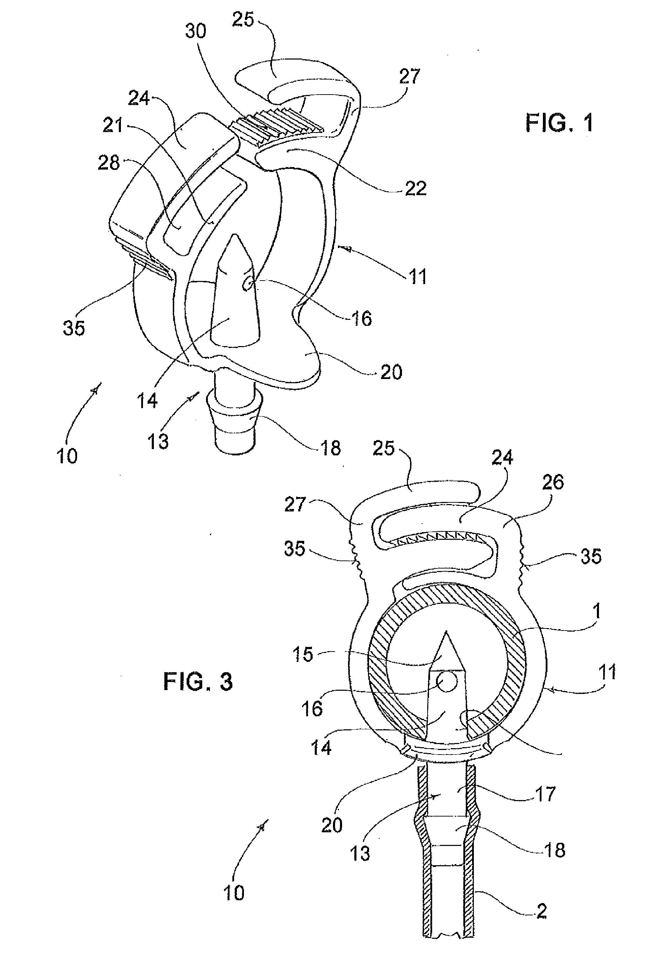

The pin 13 has a section 14 which is arranged inside the clamp 11 and ends with a tip 15, in proximity whereof a through hole 16 is provided, coaxial to the axis of the clamp 11. The hollow pin 13 likewise has a section 17 external to the clamp 11, whereon a branch pipe 2 is fitted and which is restrained there by a frustoconical portion 18 projecting from the profile of the pin 13 (Figure 3). Alternatively the outer section 17 of the pin 13 can have a threading for a coupling by screwing of an outer union.

The clamp 11 has, in the zone of the pin 13, two opposite axial projections 20 of concave shape, which follow the curved profile of the clamp 11.

At the aperture 12 the clamp 11 has a slimmer end section 21, so as to have a certain flexibility, and a thicker opposite end section 22, which is arranged externally to the section 21 and has an end bevelling 23 which facilitates superimposing of the section 22 on the section 21 in the phase of closure of the clamp.

Above the aforementioned end sections 21 and 22 respective other arched sections 24, 25 are arranged substantially parallel thereto and joined to the clamp 11 by means of respective substantially radial rear sections 26, 27 so as to determine respective opposite seats 28, 29 open frontally, the seat 28 being suitable for receiving the end section 22 of the clamp 11 and the seat 29 the aforementioned arched section 24 parallel to and superimposed on the other end section 21 of the clamp, so that the section 24 is superimposed on the section 22. Above said section 22 and below said section 24 series of dog or saw teeth 30, 31 are provided, oriented so as to engage one with the other in the phase of closure of the clamp, preventing opening thereof.

On the substantially radial sections 26, 27 of connection of the sections 24, 25 to the clamp 11 external knurlings 35 are provided to facilitate gripping thereof.

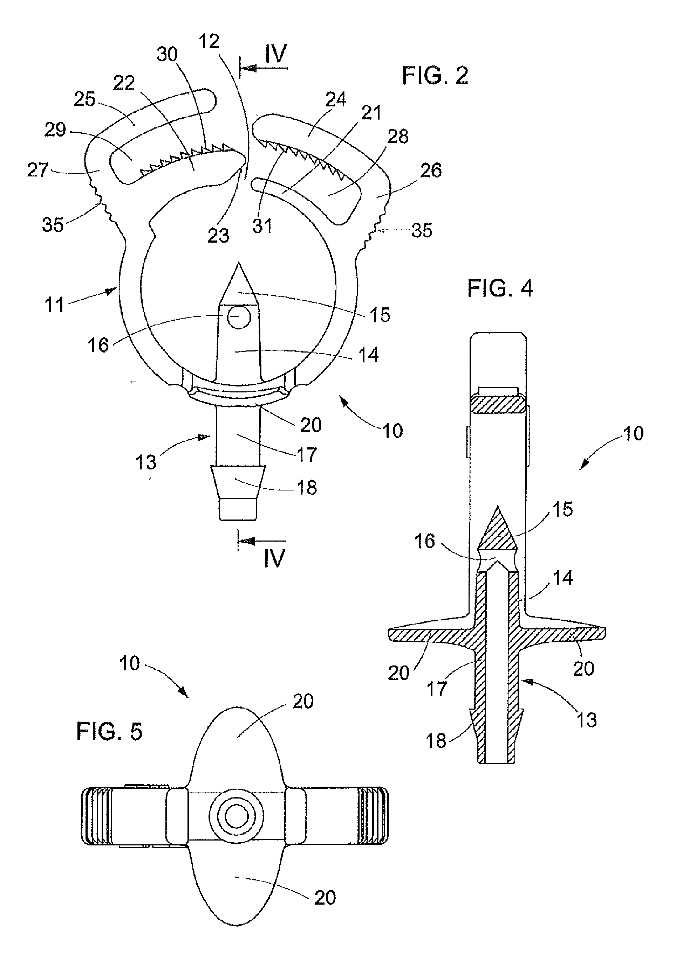

For the mounting of the clamp 11 on a main pipe 1 of an irrigation system, starting from the position shown in Figure 2, the clamp 11 is widened until the aperture 12 exceeds the diameter of the pipe 1. Then, with the tip 15 of the pin 13, a hole 40 is formed in the pipe 1 and the section 14 of the hollow pin 13 is inserted therein, after which the clamp is closed, bringing to engage the opposite teeth 30, 31 until a firm tightening on the pipe 1 is obtained, as shown in Figure 3. Subsequently, on the externally projecting section 17 of the hollow pin 13, a branch pipe 2 is fitted.

In a mounted condition the concave projections 20 at the two sides of the clamp 11 abut against the outer wall of the pipe 1, making even more stable the fixing of the hollow pin 13, which remains firmly in position both during the insertion of the branch pipe 2 and during the possible replacement or work for maintenance on the branch pipe 2.

During functioning, the pressurised water in the main pipe 1 enters through the hole 16 in the recess of the pin 13 to exit through the nozzle or dripper provided at the end of the branch pipe 2.

Should the plant to be watered not be far from the main pipe 1, it is possible to install the supply nozzle directly on the hollow pin 13, without the use of the branch pipe 2.

Naturally the invention is not limited to the particular embodiment previously described and illustrated in the accompanying drawings, but instead numerous detail changes can be made thereto, within the reach of the person skilled in the art, without thereby departing from the scope of the same invention as defined in the annexed claims.

## Claims

1. A device for connecting branch pipes (2) or supply nozzles to a main pipe (1) in irrigation systems, comprising a hollow pin (13) inserted for a section (14) within the main pipe (1) through a hole (40) formed therein and having a section (17) external to the main pipe (1) for coupling a branch pipe (2) or a supply nozzle, **characterised in that** said hollow pin (13) is carried by an elastic annular clamp (11) having an aperture (12) opposite to said hollow pin (13), at which the terminal sections of the clamp have unidirectional engaging means (30), (31) allowing the clamp to be tightened on the pipe and preventing the loosening thereof.

2. A device according to claim 1, wherein said unidirectional engaging means (30), (31) are opposite series of saw teeth or dog teeth provided on opposite terminal sections of the clamp (11).

3. A device according to claim 2, wherein said series of teeth (30), (31) are provided above a section (30) and below an opposite section (31) of the clamp (11), respectively.

4. A device according to claim 3, wherein above said toothed section (22) and below said toothed section (24) an arched section (25) and an arched section (21) are respectively provided, which are joined to the toothed sections through substantially radial sections (27), (26), thereby determining respective recesses (29), (28), wherein said toothed sections (24), (22) are housed.

5. A device according to any one of the previous claims, **characterised in that** said internal section (14) of the hollow pin (13) ends with a tip (15) suitable for forming said hole (40) in the main pipe (1).

6. A device according to any one of the previous claims, wherein said external section (17) of the hollow pin (13) has a frustoconical projection (18) for coupling a branch pipe (2) or a supply nozzle.

7. A device according to any one of the previous claims, **characterised in that** said hollow pin (13) is integrally formed with the elastic clamp (11).

8. A device according to claim 7, **characterised in that** said elastic clamp (11) has, at the hollow pin (13), two opposite concave projections (20) suitable for abutting against the outer wall of the main pipe (1).

9. A device according to any one of the previous claims, **characterised in that** it is made of plastic material.
